**Europäisches Patentamt**

**European Patent Office**

**Office européen des brevets**

(19)

(11) **EP 1 039 386 A1**

(12) **EUROPEAN PATENT APPLICATION**

(43) Date of publication:
**27.09.2000 Bulletin 2000/39**

(51) Int Cl.⁷: $G06F\ 11/00$

(21) Application number: **99105631.8**

(22) Date of filing: **19.03.1999**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **MOTOROLA, INC.
Schaumburg, IL 60196 (US)**

(72) Inventors:
• **Rozenshein, Zvika
Kfar Saba (IL)**

• **Goldenberg, Chen
69204 Tel-Aviv (IL)**
• **Chertok, Michael
Tel-Aviv (IL)**
• **Norman, Oded
42815 Pardesia (IL)**

(74) Representative: **Richardt, Markus Albert
Motorola GmbH,
Intellectual Property Dept.,
Hagenauerstrasse 47
65203 Wiesbaden (DE)**

(54) **Computer system with trace unit, and method therefor**

(57)     In a computer system (100) with a processor (130) and a processor bus (110), a trace unit (150) comprises a trace buffer (160), a write unit (161), first (170) and second (180) detectors and a logic (190). The write unit (161) consecutively writes selected addresses A or instructions I to the buffer (160). The first detector (170) continuously monitors the addresses A and asserts a first control signal (ENABLE) from the moment on when at least one address belongs to a first address set $\{A\}_{START}$ and negates it when at least one further ad-
dress belongs to a second address set $\{A\}_{STOP}$. The second detector (180) continuously monitors the instructions and provided an asserted second control signal (DETECT) only when the instruction is a jump instruction (set $\{I\}_{TRACE}$). The logic (190) receives both control signals and temporarily enables the write unit (161) so that during the execution of a program by the processor (130), the trace unit (150) records all jump instructions which are addressed within a predetermined address range (START to STOP).

*FIG. 1*

## Description

Field of the Invention

The present invention generally relates to data processing systems, and, more particularly, to a computer system having a trace unit for debugging at real-time.

Background of the Invention

Computers like digital signal processors (DSPs), microcontroller units (MCUs) and others are widely used in modern communication equipment (e.g., cellular phones, base stations). Application software designed for such computers must provide numerically correct results within a predetermined time frame. The required software function is usually verified by test runs. Testing traditionally uses breakpoint instructions where program execution is temporarily suspended. Such an approach is convenient to check the numerical correctness, but prevents the detection of problems associated with the real-time behavior of the computer.

Besides processor, memory, busses and other elements, the computer can comprise additional storage for temporarily holding addresses and other information (e.g., buffers) and detectors for recognizing predefined events. When the event is recognized, the computer has to communicate its status to the user (i.e. to the design engineer). The processor thereby enters a so-called debugging mode during which the execution of the application program is suspended. As indicated above, this is not convenient.

Useful references are [1] European Patent Application EP 0 762 280 A1, and [2] United States Patent 5,694,589 to Glew et al.

The present invention seeks to provide a computer which mitigates or avoids the above mentioned and other disadvantages and limitations of the prior art.

Brief Description of the Drawings

FIG. 1        is a simplified block diagram of a computer system of the present invention;
FIG. 2        is a simplified timing diagram of the operation of the computer system of FIG. 1;
FIGS. 3-4     are simplified block diagrams of a first detector in the system of FIG. 1 showing more detail; and
FIG. 5        is a simplified block diagram of the computer system of FIG. 1 with a memory extension.

Detailed Description of a Preferred Embodiment

As used herein, control signals are binary signals having either first logical state (e.g., logical "1") or second logical state (e.g., logical "0"). The first logical state is expressed by the word "ASSERTED" and the second logical state is expressed by the word "NEGATED". The verbs "ASSERT", "ASSERTS" and "IS ASSERTING" describe the action of a unit (e.g., a detector) which sets the logical state of a control signal to the first logical state. Similarly, the verbs "NEGATE", "NEGATES" and "IS NEGATING" describe the action which resets the logical state of the control signal to the second logical state.

The description uses well-known symbols to describe sets, such as { } (set), $\in$ (element of), $\notin$ (not element of), $\subset$ (sub-set of ), $\subseteq$ (sub-set of or equal to), $\cap$ (intersection of sets), $\cup$ (combination of sets) and $\varnothing$ (void set). These symbols are described in a variety of text books, such as, for example, [3] Bronstein, I.N.; Semendjajew, K.A.: "Taschenbuch der Mathematik", 24. edition, Leipzig 1989, section 4.1.2, pages 541-546.

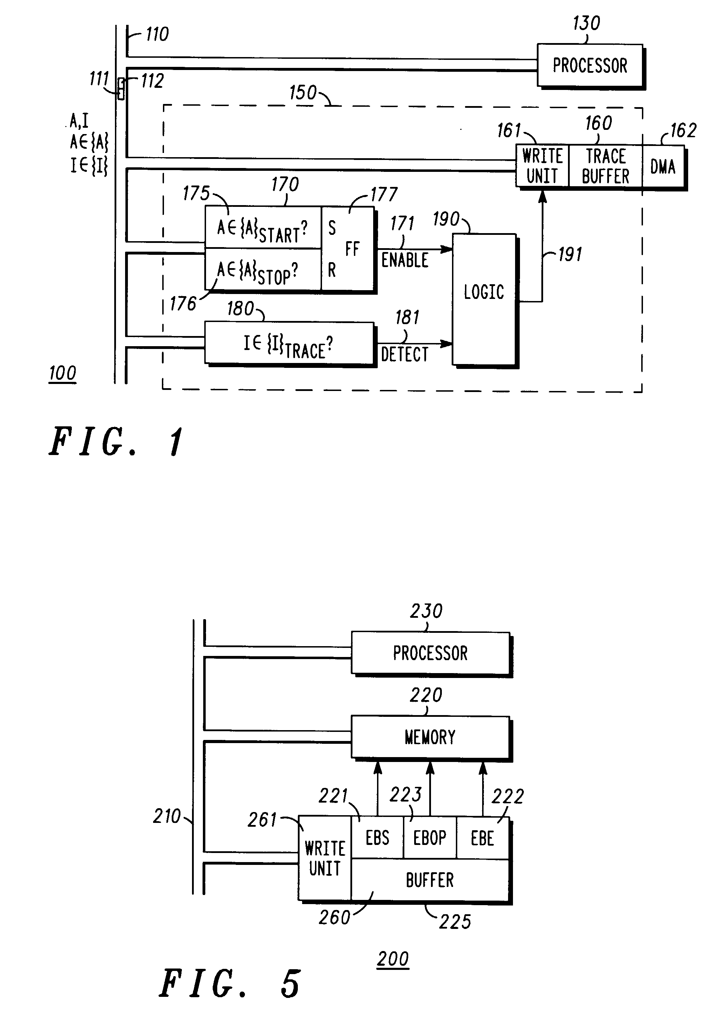

FIG. 1 is a simplified block diagram of computer system 100 of the present invention. Preferably, system 100 is a digital signal processor (DSP), but this is not essential. System 100 has a processor 130 (e.g., a central processing unit - CPU) and a processor bus 110 which carries data packets 111. In a trace unit 150 (dashed frame), system 100 further comprises trace buffer 160, write unit 161, selective detectors 170 and 180 ("watchpoint units"), and logic 190. Write unit 161 couples trace buffer 160 to bus 110. Detectors 170 and 180 have inputs coupled to bus 110 and have outputs coupled to inputs of logic 190. Logic 190 has a control connection to write unit 161. Detector 170 continuously monitors that packets 111 which are of a first type ("A") and detector 180 continuously monitors that packets 111 which are of a second type ("I"). Packets A belong to a first set { A } (i.e., A $\in$ { A }), and packets I belong to a second set { I } (i.e., I $\in$ { I }). Preferably, sets { A } and { I } are exclusive with no packet 111 belonging to both sets (i.e., { A } $\cap$ { I } = $\varnothing$). This is convenient but not necessary for the present invention. In other words, the overlapping of sets { A } and { I } is allowed. Preferably, packets I are instructions for processor 130 and packets A are corresponding addresses of these instructions. Also, packets I can comprise interrupt information and processor status information.

Detector 170 asserts control signal 171 ("ENABLE") when (**i**) packet A on bus 110 belongs to a first predetermined sub-set $\{A\}_{START}$ of $\{A\}$ (i.e. $A \in \{A\}_{START} \subset \{A\}$); and detector 170 negates signal 171 when (**ii**) packet A belongs to a second predetermined sub-set $\{A\}_{STOP}$ of $\{A\}$ (i.e. $A \in \{A\}_{STOP} \subset \{A\}$). When A does not belong to $\{A\}_{STOP}$ and does not belong to $\{A\}_{STOP}$ (i.e. $A \notin (\{A\}_{START} \cup \{A\}_{STOP})$) then detector 170 does not change ENABLE. In the non-limiting example of FIG. 1, detector 170 comprises units 175 and 176 and RS-type flip-flop 177. When packet A complies with condition (**i**) ($A \in \{A\}_{START}$), unit 175 sets (input "S") control signal ENABLE at the flip-flop output to the first logical state; and when packet A complies with condition (**ii**) ($A \in \{A\}_{STOP}$), unit 176 resets (input "R") ENABLE to the second logical state. Detector 180 provides control signal 172 ("DETECT") which is only asserted when packet I on bus 110 belongs to a third predetermined sub-set $\{I\}_{TRACE}$ of $\{I\}$ (i.e. $I \in \{I\}_{TRACE} \subset \{I\}$). Otherwise, when $I \notin \{I\}_{TRACE}$, DETECT stays negated.

It is not required that the first and second sub-sets are separated (i.e., $\{A\}_{START} \cap \{A\}_{STOP} = \varnothing$). The sub-sets can be part of each other ($\{A\}_{START} \subset \{A\}_{STOP}$ or $\{A\}_{STOP} \subset \{A\}_{START}$). Optionally, detector 170 can derive $\{A\}_{STOP}$ from $\{A\}_{START}$ by counting the occurrences of packets A at bus 110 once control signal ENABLE has been asserted (e.g., stop address = start address + user-defined offset).

Logic 190 receives control signals 171 (ENABLE) and 181 (DETECT) and controls write unit 161 through signal 191. Logic 190 enables write unit 161 only as long as control signals 171 and 181 are asserted. When enabled, write unit 161 writes at least portion 112 of packet 111 to trace buffer 160.

Trace buffer 160 can be implemented, for example, as a first-in-first-out (FIFO) memory. Also, trace buffer 160 can be a memory arrangement with an incrementing write pointer (e.g., of write unit 161). When the pointer reaches an end value or any other predefined value, buffer 160 can cause an interrupt to processor 130 (control path to processor 130 not illustrated for simplicity). Preferably, buffer 160 has 2096 storage locations (32 bit long) which can store instruction packets I (also 32-bit long). System 100 can optionally comprise a direct memory access (DMA) unit 162 coupled to trace buffer 160 which operates independently from processor 130. Trace buffer 160 can also be part of an external reading device are can be a port (not illustrated).

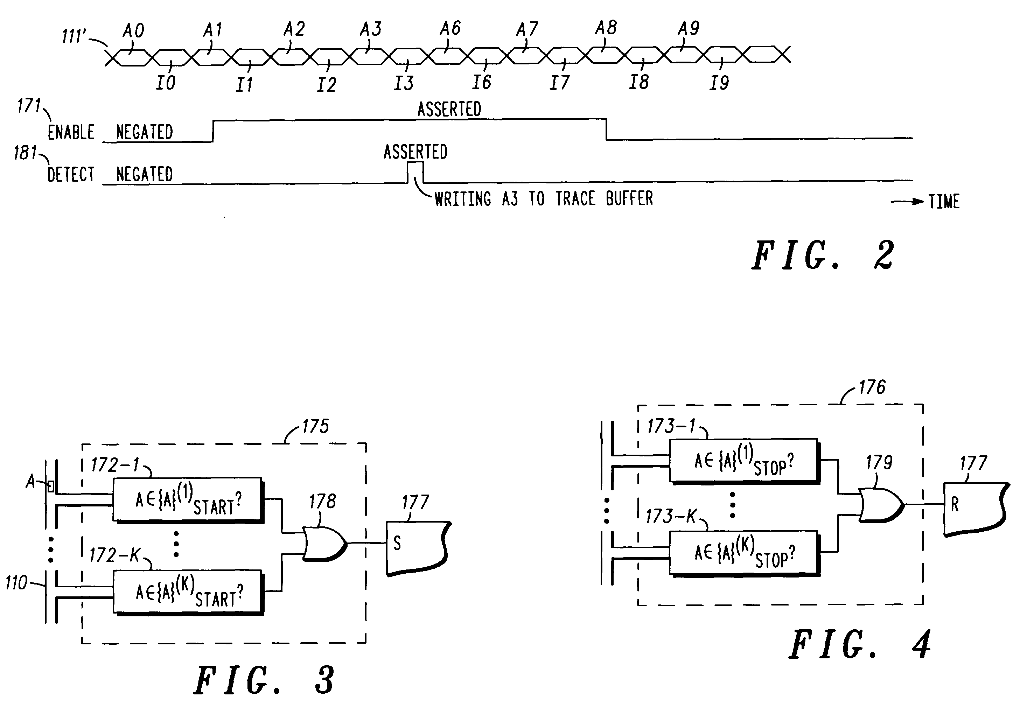

For example, when (as mentioned above) packet I is an instruction and packet A is a corresponding addresses, then enabled write unit 161 writes this corresponding address (portion 112) into buffer 160. Or, when packets I are processor instructions, trace unit 150 monitors these instructions which change the program flow (e.g., jump instructions, conditional branch instructions). In that case, the common features of the instructions to be monitored (e.g., "jump", see also FIG. 2) are stored as $\{I\}_{TRACE}$ in detector 180. Write unit 161 can also write packet 111 completely, but this is not essential for the present invention.

Those of skill in the art can implement detectors 170 and 180 without the need of further explanation and can also provide all connections (not illustrated) needed to load sub-sets $\{A\}_{START}$ and $\{A\}_{STOP}$ into detector 170 and sub-set $\{I\}_{TRACE}$ into detector 180. An example for detector 170 is explained in connection with FIGS. 3-4.

In other words, in system 100 of the present invention, trace buffer 160 traces traffic on processor bus 110 (e.g., instructions, addresses). A first user-defined event (e.g., the presence of a first predetermined address) starts tracing and a second user-defined event (e.g., a stop address) stops tracing. Tracing is limited to certain predetermined occurrences on the bus (i.e., certain instructions). While still in real-time operation, the user can read the content of trace buffer 160 (e.g., via DMA 162) without interrupting the real-time operation of processor 130.

FIG. 2 is a simplified timing diagram of the operation of computer system 100 of FIG. 1. The figure is intended to be an nonlimiting example for the purpose of explaining the present invention. Packet stream 111' (e.g., addresses A alternating with instructions I) and control signals 171 (ENABLE) and 172 (DETECT) are illustrated as electrical signals versus a horizontal time axis. Assume that while processor 130 executes a program (instruction sequence is listed by example in table 1), addresses change in the order A0, A1, A2, A3, A6, A7, A8 and A9 (address stream, column (1)), and instructions change in the order I0, I1, I2, I3, I6, I7, I8 and I9 (instruction stream, column (2)). The alternation of addresses A and instructions I in stream 111' is convenient for description, but not essential for the present invention. The distinction between sets $\{A\}$ and $\{I\}$ (here exclusive) can be implemented, for example, by a leading bit at each packet.

Further assume that monitoring the program behavior is required only from address A1 ("start") to address A8 ("stop"). In FIG. 2, an arrow pointing to the time axis indicates when write unit 161 writes an address (i.e. portion 112) to trace buffer 160. For simplicity, time intervals between changing an address and establishing (fetching) the instruction are neglected.

Table 1:

| Program executed by processor 130 | | |
|---|---|---|
| (1) | (2) | (3) |
| address A | instruction I | comment |
| A0 | I0 "add" | |
| A1 | I1 "exchange" | monitoring of jump instructions from here |
| A2 | I2 "add" | |
| A3 | I3 "jump to A6" | • jump instruction $I_{JUMP}$ with target address $A_{JUMP} = A6$; <br> • jump is recorded by writing A3 into memory 160 |
| A4 | I4 "add" | is not executed |
| A5 | I5 "exchange" | is not executed |
| A6 | I6 "add" | |
| A7 | I7 "add" | |
| A8 | I8 "exchange" | monitoring jump instructions until here; |
| A9 | I9 "add" | |

Preferably, the complete program is stored in a program memory (not shown) coupled to bus 110 and having addresses (address space)

$$\{ A \} = \{ A0, A1, A2, A3, A4, A5, A6, A7, A8, A9 \} \qquad (1)$$

and instructions

$$\{ I \} = \{ \text{"add", "exchange", "jump to } A_{JUMP}\text{"} \} \qquad (2)$$

wherein the words "add", "exchange" and "jump to" are simplified representations of a plurality of instructions which are defined for processor 130. In the example, trace unit 150 monitors the execution of jump instructions by processor 130 which belong to a predefined program sequence (here between A1 and A8) of the program. The term "jump instruction" is used as a synonym for any instruction which changes the program flow.

As explained above, the begin and the end of monitoring are defined by the predetermined first and second sub-sets that are:

$$\{ A \}_{START} \subset \{ A \} \qquad (3)$$

$$e.g., \{ A \}_{START} = A1 \qquad (4)$$

$$\{ A \}_{STOP} \subset \{ A \} \qquad (5)$$

$$e.g., \{ A \}_{STOP} = A8 \qquad (6)$$

The above mentioned third sub-set is

$$\{ I \}_{TRACE} \subset \{ I \} \qquad (7)$$

$$\{ I \}_{TRACE} = \{ \text{"jump to"} \} \tag{8}$$

Initially at time zero, ENABLE and DETECT are negated (e.g., logical 0). System 100 reads instruction 10 from the memory at address A0 and executes I0. As mentioned above, this is for simplicity assumed to happen simultaneously. Address A on bus 110 has not yet reached a predetermined start address (defined by $\{ A \}_{START}$) and ENABLE stays negated (e.g., logical 0). When in the next cycle of processor 130, the address is A1, detector 170 detects that the address is an element of the first set ($A1 \in \{ A \}_{START}$) and asserts ENABLE (e.g., to logical 1). Detector 180 receiving I1 on bus 110, keeps DETECT negated.

When a few cycles later, the address A = A3 points to instruction $I_{JUMP}$ = I3 ("jump to A6"), detector 180 detects that instruction I3 is a jump instruction and asserts DETECT (e.g., logical 1). With both ENABLE and DETECT asserted, logic 190 enables write unit 190 which writes the present address "A3" to trace buffer 160. Also, processor 130 executing instruction I3, goes to address A6 which is the jump (target) address $A_{JUMP}$ of I3. ENABLE stays asserted (e.g., logical 1) until detector 170 detects that address A8 belongs to the second set ($A8 \in \{ A \}_{STOP}$) and negates ENABLE (e.g., to logical 0).

A method of the present invention can be described as a method for tracing the operation of computer system 100 (processor 130 and processor bus 110). The method comprises the following steps: (1) asserting control signal ENABLE when least one address A present on processor bus 110 belongs to first predetermined address range $\{ A \}_{START}$; (2) enabling trace buffer 160 (e.g., in combination with logic 190); (3) writing instructions I present at processor bus 110 to trace buffer 160 (e.g., by write unit 161) only when instructions I belong to predetermined instruction set $\{ I \}_{TRACE}$; and (4) negating control signal ENABLE when at least one address A belongs to a second predetermined address range $\{ A \}_{STOP}$.

FIGS. 3-4 are simplified block diagrams of detector 170 in the system of FIG. 1 showing more detail. FIGS. 3-4 illustrate units 175 and 176 (dashed frames) each with pluralities of k = 1...K sub-detectors 172-k and 173-k, respectively, coupled via or-gates 178 and 179, respectively, to the corresponding "S" and "R" inputs of RS- flip-flop 177.

As in FIG. 3, sub-detectors 172-k each receive packets A from bus 110 and compare packets A to predetermined start sub-sets (the query $\{ A \}^{(k)}_{START} \subseteq \{ A \}_{START}$?). Combining the comparison results by or-gate 178 and RS-flip-flop 177 ("S"-input), detector 170 assert ENABLE when at least one packet A belongs to one of the start sub-sets, that is

$$\text{ENABLE} = \overset{K}{\underset{k=1}{\text{OR}}} (A \in \{ A \}^{(k)}_{START}). \tag{9}$$

As in FIG. 4, sub-detectors 173-k each receive packets A from bus 110 and compare packets A to predetermined stop sub-sets (the query $\{ A \}^{(k)}_{STOP} \subseteq \{ A \}_{STOP}$?). Combining the comparison results by or-gate 179 and RS-flip-flop 177 ("R"-input), detector 170 negates ENABLE (indicated by underscoring) when at least one packet A belongs to one of the stop sub-sets, that is

$$\underline{\text{ENABLE}} = \overset{K}{\underset{k=1}{\text{OR}}} (A \in \{ A \}^{(k)}_{STOP}). \tag{10}$$

Preferably, the number of sub-detectors 172-k, 173-k is K = 8. Those of skill in the art can implement detector 170 with more or with less sub-detectors.

Table 2 illustrates the operation of system 100 by indicating possible set definitions in nonlimiting examples (i), (ii) and (iii). The set definitions are given for set $\{ A \}$ and its sub-sets $\{ A \}_{START}$, $\{ A \}_{STOP}$, set $\{ I \}$ and its sub-set $\{ I \}_{TRACE}$. Example (i) is the example of FIG. 2. In example (ii), trace unit 150 records all interrupt occurrences when processor 130 executes a program between addresses 00,000 and 01,000 and between addresses 10,000 and 11,000. In the case, packets I comprise interrupt packet $I_{INT}$ and $\{ I \}_{TRACE}$ also comprises the interrupt packet $I_{INT}$. Detector 180 detects the occurrence of an interrupt to processor 130 and trace buffer 160 stores data (e.g., addresses) associated with the interrupt. In example (iii), trace unit 150 traces all instructions which are executed between a single start address and a single stop address.

Table 2:

| Operating examples | | | | | |
|---|---|---|---|---|---|
| | first set { A } | first sub-set $\{A\}_{START} \subset \{A\}$ | second sub-set $\{A\}_{STOP} \subset \{A\}$ | second set { I } | third sub-set $\{I\}_{TRACE} \subset \{I\}$ |
| (i) | addresses e.g., all addresses | single address e. g., A1 | single address e. g., A8 | instructions for processor 130 { I } $\cap \{A\} = \varnothing$ | jump instructions e. g. "jump to A6" |
| (ii) | addresses e.g., all addresses | multiple addresses e.g., 00,000; 10,000 cf. FIG. 3 | multiple address e. g., 01,000, 11,000 cf. FIG. 4 | instructions for processor 130 { I } $\cap \{A\} = \varnothing$ | interrupt information from bus 110 |
| (iii) | addresses e.g., all addresses | e.g., single address to start tracing | e.g., single address to stop tracing | instructions for processor 130 { I } $\cap \{A\} = \varnothing$ | $\{I\}_{TRACE} = \{I\}$ tracing all instructions |

FIG. 5 is a simplified block diagram of computer system 200. System 200 is a further embodiment of system 100 in which trace buffer 160 can optionally be extended. In FIGS. 1 and 5, reference numbers 100/200 (system), 110/210 (bus), 130/230 (processor), 160/260 (buffer) and 161/261 (write unit) stand for analogous components. However, their operation or function is different as a consequence of the embodiment which will be explained in more detail hereinafter. Memory 220 is a new element and serves as extended buffer. However, it is preferable that existing system memory is used therefor. Detectors 170 and 180 and logic 190 (cf. FIG. 1) are not illustrated for simplicity.

Memory 220 is coupled to bus 210. Buffer 260 is associated with memory controller 225 pointing to memory 220 with extended buffer start (EBS) address register 221, extended buffer end (EBE) address register 222, and extended buffer DMA pointer (EBDP) 223. Preferably, the values of EBS and EBE are user-defined. Persons of skill in the art can provide the necessary circuitry without the need of further explanation herein.

When as described above, write unit 261 writes portions 112 (cf. FIG. 1) into trace buffer 260, and trace buffer 260 becomes full, system 200 continues to operate either (**a**) in an interrupt mode while trace buffer 260 is read (e.g., via port 162, cf. FIG. 1, mentioned above) or (**b**) in an extended buffer mode while write unit 261 write portions 112 to memory 220 instead to buffer 260. In case (b), EBDP 223 is incremented every time portion 112 is written into memory 220.

It is convenient to use existing DMA structures for registers 221-223 of controller 225. Since the DMA is shared between other components of system 200, the DMA can not serve memory 220 all time. Therefore, it is convenient to initiate the extended buffer mode (b) already when trace buffer 260 is partly full. Further, the DMA can transfer the complete content of buffer 260 to memory 220 (between EBS, EBE).

In other words, in computer system 100/200, trace buffer 160/260 is temporarily (e.g., extended buffer mode) extended into existing memory 220 by registers 221, 222 for identifying user-defined start and end locations EBS, EBE and pointer 223 pointing to memory locations in existing memory 220 within the start and end locations.

While the invention has been described in terms of particular structures, devices and methods, those of skill in the art will understand based on the description herein that it is not limited merely to such examples and that the full scope of the invention is properly determined by the claims that follow.

**Claims**

1.  A computer system with a processor coupled to a processor bus which carries data packets, said computer system comprising:

    a trace buffer coupled to said bus by a write unit;
    a first selective detector coupled to said bus, said first detector continuously monitoring packets A $\in$ { A } for

    •   asserting a first control signal when A $\in$ $\{A\}_{START} \subset \{A\}$ and
    •   negating said first control signal when A $\in$ $\{A\}_{STOP} \subset \{A\}$;

    a second selective detector coupled to said bus, said second detector continuously monitoring packets I $\in$ { I } and substantially simultaneously providing a second control signal which is asserted when I $\in$ $\{I\}_{TRACE} \subset \{I\}$

or which is otherwise negated; and

a logic for enabling said write unit only as long as said first and said second control signals are both asserted so that said enabled write unit writes at least a portion of the packet present at said bus to said trace buffer.

2. The computer system of claim 1, wherein said trace buffer is a first-in-first-out (FIFO) memory.

3. The computer system of claim 1, wherein said trace buffer has a write pointer interrupting said processor when reaching an end value.

4. The computer system of claim 1, wherein said first detector comprises a RS-flip-flop which asserts or negates said first control signal.

5. The computer system of claim 1 which is a digital signal processor (DSP).

6. The computer system of claim 1 wherein $\{A\}$ and $\{I\}$ are exclusive, $\{A\} \cap \{I\} = \varnothing$.

7. The computer system of claim 6, wherein said packets I are instructions for said processor, and packets A are corresponding addresses of said instructions, and wherein said write unit, when enabled by said logic, writes the corresponding address to said trace buffer.

8. The computer system of claim 1, wherein said packets I are instructions of said processor and $\{I\}_{TRACE}$ comprises a change of flow instruction $I_{JUMP}$.

9. The computer system of claim 8, wherein said packets A are addresses of said instructions and said write unit writes, when enabled by said logic, a target address $A_{JUMP}$ of said change of flow instruction $I_{JUMP}$ into said trace buffer.

10. The computer system of claim 6 wherein packets I comprise an interrupt packet $I_{INT}$ and $\{I\}_{TRACE}$ comprises said interrupt packet $I_{INT}$ so that said second detector detects the occurrence of an interrupt to said processor and said trace unit stores data associated with said interrupt in said trace buffer.

11. The computer system of claim 1, wherein said first detector comprises a plurality of sub-detectors each receiving said packets A from said bus and comparing said packets A to predetermined start sub-sets $\{A\}^{(k)}_{START} \subseteq \{A\}_{START}$ so that said first detector asserts said first control signal ENABLE when at least one packet A belongs to one of said predetermined start sub-sets, that is

$$\text{ENABLE} = \underset{k=1}{\overset{K}{\text{OR}}} (A \in \{A\}^{(k)}_{START}) \quad .$$

12. The computer system of claim 1, wherein said first detector comprises a plurality of sub-detectors each receiving said packets A from said bus and comparing said packets to predetermined stop sub-sets $\{A\}^{(k)}_{STOP}$, so that said first detector provides said first control signal (ENABLE) in said second logical state when at least one received packet A belongs to one of said predetermined stop sub-sets, that is

$$\underline{\text{ENABLE}} = \underset{k=1}{\overset{K}{\text{OR}}} (A \in \{A\}^{(k)}_{STOP}) \quad .$$

13. The computer system of claim 1, wherein said first detector derives $\{A\}_{STOP}$ from $\{A\}_{START}$ by counting the occurrences of packets A at said bus once said first control signal has been asserted.

14. The computer system of claim 1, wherein
$\{A\}_{STOP} \subset \{A\}_{START}$ or $\{A\}_{START} \subset \{A\}_{STOP}$.

15. The computer system of claim 1, wherein said packets I are 32-bit long instructions for said processor and wherein said trace buffer has 2096 locations each 32 bit long.

16. The computer system of claim 1, further comprising a direct memory access (DMA) unit coupled to said trace buffer which operates independently from said processor.

17. The computer system of claim 1, wherein said trace buffer is part of an external reading device.

18. The computer system of claim 1, wherein said trace buffer is temporarily extended into system memory by first and second registers for identifying user-defined start and end locations, respectively, and a pointer pointing to memory locations in said existing memory within said start and end locations.

19. A method for tracing the operation of a computer system having a processor and a processor bus, said method comprising the steps of:

(1) asserting a control signal when least one address present on said processor bus belongs to a first predetermined address range;
(2) enabling a trace buffer:
(3) writing instructions present at said processor bus to said trace buffer only when said instructions belong to a predetermined instruction set; and
(4) negating said control signal when at least one address belongs to a second predetermined address range.

20. A computer system with a processor coupled to a processor bus which carries data packets, said computer system comprising:

a trace buffer coupled to said bus by a write unit;
a first selective detector coupled to said bus, said first detector continuously monitoring packets belonging to a first set for

• asserting a first control signal when said packets belong to a first sub-set of said first set and
• negating said first control signal when said packets belong to a second sub-set of said first set;

a second selective detector coupled to said bus, said second detector continuously monitoring packets belonging to a second set and substantially simultaneously providing a second control signal which is asserted when said packets belong to a sub-set of said second set or which is otherwise negated; and
a logic for enabling said write unit only as long as said first and said second control signals are both asserted so that said enabled write unit writes at least a portion of the packet present at said bus to said trace buffer.

*FIG. 1*

*FIG. 5*

200

FIG. 2

FIG. 3

FIG. 4

EP 1 039 386 A1

**EP 1 039 386 A1**

<table>
<tr><td colspan="2">European Patent<br>Office</td><td>**EUROPEAN SEARCH REPORT**</td><td>Application Number<br><br>EP 99 10 5631</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | FR 2 454 138 A (LE MATERIEL TELEPHONIQUE) 7 November 1980 (1980-11-07)<br><br>* page 2, line 5 - page 3, line 29 * | 1,4,5,7, 11-13, 19,20 | G06F11/00 |
| Y | | 2,3, 8-10,16, 17 | |
| Y | EP 0 286 988 A (HUGHES AIRCRAFT COMPANY) 19 October 1988 (1988-10-19)<br>* page 7, line 16 - line 24 * | 2,16,17 | |
| Y | EP 0 455 946 A (INTERNATIONAL BUSINESS MACHINES) 13 November 1991 (1991-11-13)<br>* column 7, line 57 - column 8, line 9 * | 3 | |
| Y | WO 98 45783 A (ADVANCED MICRO DEVICES, INC.) 15 October 1998 (1998-10-15)<br>* abstract * | 8,9 | |
| Y | GB 2 257 550 A (INTERNATIONAL COMPUTERS LIMITED) 13 January 1993 (1993-01-13)<br>* abstract *<br>----- | 10 | TECHNICAL FIELDS SEARCHED<br><br>G06F |

The present search report has been drawn up for all claims

| Place of search | Date of completion of the search | Examiner |
|---|---|---|
| THE HAGUE | 8 September 1999 | Corremans, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

11

**ANNEX TO THE EUROPEAN SEARCH REPORT
ON EUROPEAN PATENT APPLICATION NO.**

EP 99 10 5631

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-1999

| Patent document cited in search report | | Publication date | Patent family member(s) | | Publication date |
|---|---|---|---|---|---|
| FR 2454138 | A | 07-11-1980 | NONE | | |
| EP 286988 | A | 19-10-1988 | US | 4935881 A | 19-06-1990 |
| | | | DE | 3853928 D | 13-07-1995 |
| | | | DE | 3853928 T | 19-10-1995 |
| | | | NO | 176119 B | 24-10-1994 |
| EP 455946 | A | 13-11-1991 | JP | 4229340 A | 18-08-1992 |
| WO 9845783 | A | 15-10-1998 | WO | 9845782 A | 15-10-1998 |
| | | | WO | 9845784 A | 15-10-1998 |
| GB 2257550 | A | 13-01-1993 | NONE | | |

EPO FORM P0459

For more details about this annex : see Official Journal of the European Patent Office, No. 12/82